**Europäisches Patentamt**

**European Patent Office**

**Office européen des brevets**

(11) Numéro de publication: **0 034 965**
**B1**

(12) **FASCICULE DE BREVET EUROPEEN**

(45) Date de publication du fascicule du brevet:
12.10.83

(21) Numéro de dépôt: **81400197.0**

(22) Date de dépôt: **09.02.81**

(51) Int. Cl.³: **B 60 J 7/18**

(54) **Dispositif d'entraînement d'un panneau mobile.**

(30) Priorité: **22.02.80 FR 8004009**

(43) Date de publication de la demande:
**02.09.81 Bulletin 81/35**

(45) Mention de la délivrance du brevet:
**12.10.83 Bulletin 83/41**

(84) Etats contractants désignés:
**DE GB IT NL**

(56) Documents cités:
**US-A-3 545 806**

(73) Titulaire: **AUTOMOBILES PEUGEOT, 75, avenue de la Grande Armée, F-75116 Paris (FR)**

(72) Inventeur: **Bonsergent, Jacques, 62, Avenue Victor Hugo, F-92100 Boulogne (FR)**

(74) Mandataire: **Weinstein, Zinovi et al, Cabinet Z. WEINSTEIN 20, Avenue de Friedland, F-75008 Paris (FR)**

ACTORUM AG

# Dispositif d'entraînement d'un panneau mobile

La présente invention se rapporte d'une manière générale à un dispositif d'entraînement d'un panneau mobile et concerne plus particulièrement le mécanisme d'entraînement du panneau ouvrant d'un toit de véhicule.

On connaît déjà divers systèmes d'entraînement à commande manuelle ou électrique du panneau formant toit ouvrant d'une automobile.

Ces systèmes utilisent un certain nombre de moyens d'entraînement du panneau par rapport à une structure d'encadrement fixe dans laquelle peut rouler ou glisser le panneau. Toutefois, l'agencement et le nombre des moyens d'entraînement utilisés posaient des problèmes d'encombrement et de montage difficiles à résoudre. On comprend en effet que le montage d'un mécanisme d'entraînement sous le toit d'un véhicule constitue une opération délicate, de même que le camouflage de ce mécanisme dans le toit. Dès lors, les opérations de montage du mécanisme d'entraînement du panneau de toit demeurent coûteuses et exigent généralement l'utilisation de pièces compliquées et coûteuses de façon à permettre un agencement susceptible de représenter un encombrement minimal.

Il a déjà été proposé dans le brevet US-A No 3545806 un mécanisme de commande pour toit ouvrant de véhicule qui comprend, entre autres, un moteur électrique solidaire du panneau mobile et entraînant ce panneau par rapport à la partie fixe du toit au moyen d'une transmission par arbres, pignons et crémaillères. Outre le fait que ce système de commande exige la fabrication et le montage d'une pluralité de pièces mécaniques sur la toiture du véhicule, la transmission elle-même, par pignons et crémaillères, présente des risques de grippage et doit être entretenue.

Aussi la présente invention a-t-elle pour but de remédier à tous ces inconvénients en proposant un nouveau dispositif d'entraînement d'un panneau ouvrant de toit de véhicule qui est particulièrement simple, peu coûteux, facile et rapide à monter, et ne nécessite aucun entretien particulier.

A cet effet, l'invention a pour objet un dispositif d'entraînement d'un panneau mobile, tel que par exemple le panneau ouvrant d'un toit de véhicule, et du type comprenant un générateur de mouvement solidaire du panneau, tel que par exemple un moteur électrique, une manivelle ou analogue, entraînant par l'intermédiaire d'un système de transmission, des organes de réaction coopérant avec une structure d'encadrement fixe pour ainsi entraîner par réaction le panneau mobile monté coulissant dans ladite structure d'encadrement entre une position ouverte et une position fermée, caractérisé en ce que ledit système de transmission étant constitué par un câble en boucle fermée entraîné par ledit générateur de mouvement et passant autour de poulies solidaires du dessous du panneau mobile, chaque organe de réaction est fixé à un brin de ce câble disposé parallèlement à un rail de guidage dudit organe de réaction sur le panneau mobile, tandis que ladite structure d'encadrement est munie de moyens pour immobiliser lesdits organes de réaction vis-à-vis des mouvements dirigés dans la direction de déplacement du panneau mobile.

On comprend déjà que l'utilisation d'un câble permet une souplesse très grande d'implantation du générateur de mouvement sur le panneau et assure en toutes circonstances une excellente fiabilité de fonctionnement du toit ouvrant.

Selon une autre caractéristique de l'invention, les organes de réaction précités comportent chacun un doigt ou analogue, et les moyens précités d'immobilisation de ces organes sont constitués par un logement ménagé dans la structure d'encadrement et dans lequel ledit doigt est engagé de manière libre.

On ajoutera ici que le logement précité comporte deux faces transversales à la structure d'encadrement précitée, à savoir une première face jouant le rôle de butée pour le doigt, et une deuxième face qui forme non seulement une butée, mais aussi une rampe pour ledit doigt, de façon à permettre le soulèvement du panneau mobile en fin de fermeture et son abaissement en début d'ouverture.

Suivant encore une autre caractéristique de l'invention, la première face précitée est constituée par l'extrémité d'un rail ou d'une glissière permettant le roulement ou le glissement du panneau mobile, tandis que la deuxième face précitée avec rampe est constituée par une came fixée sur la structure d'encadrement entre ladite extrémité du rail ou de la glissière et l'extrémité d'un autre rail aligné avec le précédent. On ajoutera encore que le panneau mobile précité comporte des galets ou des patins de guidage coopérant avec les rails ou glissières précités, lesdits patins présentant une forme apte à interdire tout soulèvement du panneau mobile en dehors de la position pour laquelle ledit panneau est soulevé ou abaissé par la came précitée.

Suivant encore une autre caractéristique de l'invention, le câble en boucle fermée passe autour de quatre poulies disposées aux quatre coins du panneau mobile de telle façon que l'organe de réaction fixé aux brins latéraux du câble soit guidé dans un rail disposé parallèlement auxdits brins entre ceux-ci et le bord du panneau mobile.

D'autres avantages et caractéristiques de l'invention apparaîtront mieux dans la description détaillée qui suit et se réfère aux dessins annexés, donnés uniquement à titre d'exemple, et dans lesquels:

la fig. 1 est une vue schématique en plan et de dessous du toit ouvrant d'un véhicule équipé d'un mécanisme d'entraînement conforme à l'invention;

les fig. 2 à 4 illustrent schématiquement en coupe et élévation un panneau mobile de toit ouvrant suivant trois positions, à savoir en position d'ouverture (fig. 2), en position abaissée de fermeture (fig. 3), et en position soulevée de fermeture définitive (fig. 4) suivant laquelle le panneau mobile se trouve au niveau du profil général du toit, et

la fig. 5 est une vue schématique en élévation et coupe d'un panneau mobile équipé de patins de glissement.

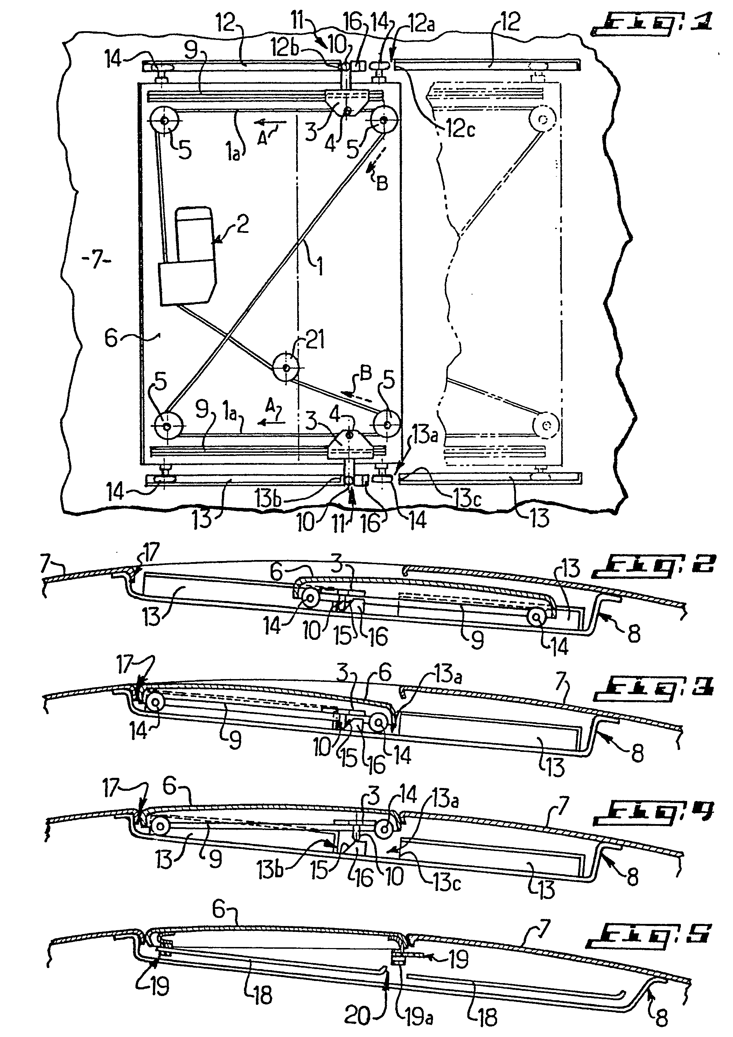

Selon un exemple de réalisation, et en se reportant plus particulièrement à la fig. 1, un dispositif d'entraînement conforme à l'invention comprend essentiellement un câble 1 qui peut être entraîné dans un sens ou dans l'autre par un générateur de mouvement, tel qu'un moteur électrique 2 ou une manivelle, et qui est relié à des organes ou pièces d'entraînement 3. On a montré en 4 la fixation des pièces 3 sur le câble 1.

Comme on le voit bien sur la fig. 1, le câble 1 constitue en quelque sorte une boucle fermée qui passe autour de quatre poulies 5 solidaires du dessous du panneau mobile 6, lequel panneau constitue par exemple le panneau ouvrant d'un toit 7 de véhicule. Le moteur 2 est également fixé, par tout moyen approprié, au panneau ouvrant 6. Ainsi, le moteur 2, le câble 1 et les pièces 3 de réaction du panneau mobile 6 par rapport à la structure d'encadrement 8 (fig. 2 à 5) dans laquelle peut coulisser le panneau pour prendre une position ouverte ou fermée sont tous solidaires de de ce dernier.

On a montré en 9 des rails latéraux dans lesquels sont guidées les pièces 3. Ces rails 9 sont sensiblement parallèles aux brins 1a du câble 1 sur lesquels sont fixées en 4 les pièces 3, comme on l'a dit précédemment. Ces dernières comportent chacune, par exemple, un bord tombé (non représenté) qui est maintenu dans le rail 9.

Chaque pièce 3 comporte un doigt ou analogue 10 engagé de manière libre dans un logement 11 ménagé dans la structure d'encadrement 8 et qui sera décrit en détail ultérieurement.

Sur la structure d'encadrement 8, et de chaque côté, sont fixés des rails 12 et 13, sur lesquels prennent appui des galets ou analogues 14, comme on le voit bien sur la fig. 1.

Les rails 12 et 13 comportent une interruption 12a, 13a définie par les extrémités 12b, 12c et 13b, 13c et permettant la descente des galets 14 comme on le voit sur les fig. 1 et 3.

Le logement 11, qui est en quelque sorte situé dans l'interruption 12a, 13a des rails 12 et 13, est défini par deux faces transversales à la structure d'encadrement 8, à savoir une première face jouant le rôle de butée pour le doigt 10 et constituée par l'extrémité 12b, 13b du rail 12, 13 et une deuxième face qui forme non seulement une butée, mais aussi une rampe 15 pour ledit doigt, et qui est constituée, comme on le voit mieux sur les fig. 2 à 5, par une came 16 fixée sur la structure d'encadrement 8.

Au lieu des galets 14 assurant le roulement du panneau mobile 6 sur les rails 12 et 13, on peut prévoir des patins 19 susceptibles de glisser sur des glissières 18, comme on le voit bien sur la fig. 5. On notera que, sur cette figure, on n'a pas représenté, dans un but de clarté, la came 16 et les pièces 3. La forme particulière de ces patins sera décrite à propos du fonctionnement du dispositif selon l'invention que l'on va maintenant exposer:

Comme il apparaît clairement sur les figures, on comprend que chacune des pièces 3 (ou plus précisément chacun des doigts 10) demeurera prisonnière dans le logement 11 entre l'extrémité 12b, 13b du rail 12, 13 et la came 16. En d'autres termes, chaque pièce 3 restera fixe longitudinalement par rapport à la structure d'encadrement 8 du toit 7.

Dès lors, si le moteur 2 tourne dans un sens tel qu'il exerce une traction sur les brins 1a du câble 1 suivant les flèches A visibles sur la fig. 1, le panneau 6 s'ouvrira, c'est-à-dire se déplacera vers le droite de cette figure, pour prendre la position représentée partiellement en traits mixtes sur ladite figure. En d'autres termes, ce déplacement vers la droite du panneau 6 sera dû à la réaction du doigt 10 contre l'extrémité 12b, 13b du rail 12, 13.

Si, par contre, le moteur 2 tourne dans l'autre sens, c'est-à-dire qu'il exerce une traction sur le câble 1 suivant les flèches B, le panneau 6 se déplacera de la droite vers la gauche de la fig. 1 pour se fermer. En effet, dans ce cas-là, la came 16 jouera le rôle d'une butée de réaction. Mais, en plus de son rôle de butée, il faut noter que la came 16 permet le soulèvement ou l'abaissement du panneau mobile 6 respectivement en fin de fermeture ou en début d'ouverture comme on l'expliquera brièvement ci-après.

En effet, comme on le voit sur la fig. 3, lorsque le panneau mobile 6 parvient dans sa position de fermeture en butée contre la structure d'encadrement, comme on l'a montré en 17, l'entraînement du câble 1 par le moteur électrique n'est pas arrêté pour autant. En effet, les pièces de réaction 3 demeurent toujours sollicitées par le câble 1, ce qui permettra aux doigts 10 de monter sur la rampe 15 de la came 16, de sorte que le panneau mobile sera soulevé et viendra se confondre avec le profil général du toit 7, comme on le voit bien sur la fig. 4. Autrement dit, en fin de fermeture, le panneau mobile 6 pivote en 17 par le fait que les pièces 3 actionnées par le câble 1, qui ne peut plus faire avancer le panneau mobile 6, permettent la montée des doigts 10 sur la rampe 15 de la came 16. Si, partant de la position illustrée sur la fig. 4, on veut ouvrir le panneau 6, il suffit de faire tourner le moteur 2 dans l'autre sens, et le mouvement inverse de celui décrit précédemment se produira. En d'autres termes, le câble 1 agira tout d'abord sur les pièces 3, de sorte que les doigts 10 descendront la rampe 15, ce qui fera descendre le panneau 6, comme on le voit sur la fig. 3. Puis les doigts 10 viendront en butée sur l'extrémité 12b, 13b des rails 12, 13, de sorte que le panneau 6 sera alors entraîné en position d'ouverture (fig. 2).

Le mode de réalisation représenté sur la fig. 5 fonctionne exactement de la même façon que celui illustré aux fig. 1 à 4. Toutefois, comme on l'a dit précédemment, les galets 14 sont ici remplacés par des patins 19. Et, comme on l'a montré en 19a, les patins 19 situés à l'extrémité arrière du panneau mobile 6 présenteront une forme spéciale et apte à interdire tout soulèvement dudit panneau en dehors de la position pour laquelle le panneau est soulevé ou abaissé par la came 16. En d'autres termes, grâce au décrochement de la partie 19a des patins 19, ces derniers se dégageront des glissières 18 (qui jouent le même rôle que les rails 12, 13) au niveau de l'interruption 20 de ces glissières, le doigt 10 des pièces d'entraînement ou de réaction 3 prenant en quelque sorte le relais de la portance de la partie arrière du panneau 6.

On a donc réalisé, suivant l'invention, un mécanisme d'entraînement de toit ouvrant de véhicule qui est particulièrement simple, n'est aucunement sujet aux coincements, et dont la totalité des éléments actifs est montée sur le dessous du panneau et peut être facilement cachée par une garniture décorative.

Bien entendu, l'invention n'est nullement limitée aux modes de réalisation décrits et représentés qui n'ont été donnés qu'à titre d'exemple.

C'est ainsi qu'on peut prévoir divers galets de tension du câble 1, comme on l'a montré en 21 sur la fig. 1, et ce à divers endroits du panneau. Egalement, l'une des faces du logement 11 recevant le doigt 10 pourrait parfaitement être constituée par un élément autre que l'extrémité 12b, 13b des rails 12, 13.

## Revendications

1. Dispositif d'entraînement d'un panneau mobile, tel que par exemple le panneau ouvrant d'un toit de véhicule, et du type comprenant un générateur de mouvement (2) solidaire du panneau (6), tel que par exemple un moteur électrique, une manivelle ou analogue, entraînant, par l'intermédiaire d'un système de transmission, des organes de réaction (3, 10) coopérant avec une structure d'encadrement fixe (8) pour ainsi entraîner par réaction le panneau mobile (6) monté coulissant dans ladite structure d'encadrement entre une position ouverte et une position fermée, caractérisé en ce que, ledit système de transmission étant constitué par un câble (1) en boucle fermée entraîné par ledit générateur de mouvement et passant autour de poulies (5) solidaires du dessous du panneau mobile (6), chaque organe de réaction (3, 10) est fixé à un brin (1a) de ce câble disposé parallèlement à un rail de guidage (9) dudit organe de réaction sur le panneau mobile, tandis que ladite structure d'encadrement est munie de moyens pour immobiliser lesdits organes de réaction (3, 10) vis-à-vis des mouvements dirigés dans la direction de déplacement du panneau mobile (6).

2. Dispositif selon la revendication 1, caractérisé en ce que les organes de réaction précités comportent chacun un doigt (10) ou analogue, et les moyens précités d'immobilisation de ces organes sont constitués par un logement (11) ménagé dans la structure d'encadrement (8) et dans lequel ledit doigt est engagé de manière libre.

3. Dispositif selon la revendication 2, caractérisé en ce que le logement précité (11) comporte deux faces transversales à la structure d'encadrement précitée, à savoir une première face jouant le rôle de butée pour le doigt (10), et une deuxième face qui forme non seulement une butée mais aussi une rampe (15) pour ledit doigt, de façon à permettre le soulèvement du panneau mobile en fin de fermeture et son abaissement en début d'ouverture.

4. Dispositif selon la revendication 3, caractérisé en ce que la première face précitée est constituée par l'extrémité (12b, 13b) d'un rail (12, 13) ou d'une glissière (18) permettant le roulement ou le glissement du panneau mobile (6), tandis que la deuxième face précitée avec rampe (15) est constituée par une came (16) fixée sur la structure d'encadrement (8) entre ladite extrémité du rail ou de la glissière et l'extrémité (12c, 13c) d'un autre rail aligné avec le précédent.

5. Dispositif selon la revendication 4, caractérisé en ce que le panneau mobile précité comporte des galets (14) ou des patins de guidage (19) coopérant avec les rails ou glissières précitées (12, 13, 18), lesdits patins (19) présentant une forme apte à interdire tout soulèvement du panneau mobile (6) en dehors de la position pour laquelle ledit panneau est soulevé ou abaissé par la came précitée (16).

6. Dispositif selon la revendication 1, caractérisé en ce que le câble en boucle fermée (1) passe autour de quatre poulies (5) disposées aux quatre coins du panneau mobile (6) de telle façon que l'organe de réaction (3, 10) fixé aux brins latéraux (1a) du câble (1) soit guidé dans le rail (9) disposé parallèlement auxdits brins entre ceux-ci et le bord du panneau mobile (6).

## Ansprüche

1. Vorrichtung zum Antrieb einer beweglichen Platte wie z.B. eines Schiebedaches eines Fahrzeugdaches, und von der Gattung, die einen mit der Platte (6) fest verbundenen Bewegungserzeuger wie z.B. einen elektrischen Motor, eine Handkurbel o.dgl., umfasst, welcher über eine Übertragungseinrichtung mit einem ortsfesten Rahmenaufbau (8) zusammenwirkende Rückwirkungsorgane (3, 10) antreibt, um somit durch Rückwirkung die in dem Rahmenaufbau verschiebbar angeordnete bewegliche Platte (6) zwischen einer offenen und einer geschlossenen Stellung anzutreiben, dadurch gekennnzeichnet, dass, bei einer, aus einem, eine geschlossene Schleife bildenden, durch den Bewegungserzeuger angetriebenen und um fest mit der Unterseite der beweglichen Platte (6) verbundenen Seilscheiben (5) geführtes Kabel (1), bestehenden Übertragungseinrichtung, jedes Rückwirkungsorgan (3, 10) an einem, mit einer Schiene (9) zur Führung des Rückwirkungsorgans an der beweglichen Platte, gleichgerichtet angeordneten Trumm (1a) dieses Kabels befestigt ist, während der Rahmenaufbau mit Mitteln zum Festhalten dieser Rückwirkungsorgane (3, 10) gegenüber in Richtung der Verschiebung der beweglichen Platte (6) gerichteten Bewegungen versehen ist.

2. Vorrichtung nach Anspruch 1, dadurch gekennzeichnet, dass die Rückwirkungsorgane je einen Zapfen (10) o.dgl. aufweisen und die Mittel zum Festhalten dieser Organe aus einer in dem Rahmenbau (8) vorgesehenen Aussparung in welche der Zapfen frei eingreift, bestehen.

3. Vorrichtung nach Anspruch 2, dadurch gekennzeichnet, dass die Aussparung (11) zwei zum Rahmenaufbau quergerichtete Seiten aufweist, und zwar eine erste als Anschlag für den Zapfen (10) dienende Seite und eine zweite Seite, die nicht nur einen Anschlag, sondern auch einer schiefe Ebene (15) für den Zapfen bildet, um somit das Anheben der beweglichen Platte am Ende des Schliessens und deren Absenken am Anfang des Öffnens zu gewährleisten.

4. Vorrichtung nach Anspruch 3, dadurch gekennzeichnet, dass die erste Seite durch das Ende (12b, 13b) einer Schiene (12, 13) oder einer Gleitbahn (18) gebildet wird, welche das Rollen bzw. Gleiten der beweglichen Platte (6) gestattet, während die zweite Seite mit der schiefen Ebene (15) durch einen am Rahmenaufbau (8) zwischen dem genannten Ende der Schiene bzw. Gleitbahn und dem Ende (12c, 13c) einer anderen mit der vorangehenden fluchtend ausgerichteten Schiene, befestigten Nocken (16) gebildet wird.

5. Vorrichtung nach Anspruch 4, dadurch gekennzeichnet, dass die bewegliche Platte mit den Schienen oder Gleitbahnen (12, 13, 18) zusammenwirkende Führungsrollen (14) oder -gleitkufen (19) aufweist, wobei die Gleitkufen (19) eine Gestalt haben, die geeignet ist, jedes Anheben der beweglichen Platte (6) zu verhindern, mit Ausnahme derjenigen Lage in welcher die Platte durch den Nocken (16) angehoben bzw. abgesenkt wird.

6. Vorrichtung nach Anspruch 1, dadurch gekennzeichnet, dass das eine geschlossene Schleife bildende Kabel (1) über vier derart an den vier Ekken der beweglichen Platte (6) angeordnete Seilscheiben (5) geführt wird, dass das an den Seitentrummen (1a) des Kabels (1) befestigte Rückwirkungsorgan (3, 10), in der mit den Trummen gleichgerichtet zwischen denselben und dem Rand der beweglichen Platte (6) angeordneten Schiene (9) geführt wird.

## Claims

1. A device for driving a movable panel, such as for example the opening panel of vehicle roof, of the type comprising a motion generator (2) secured to the panel (6), such as for example an electric motor, a crank or the like, driving through the medium of a transmission system, reaction members (3, 10) co-operating with a stationary frame structure (8) to thus drive by reaction the movable panel (6) mounted slidingly in the said frame structure between an open position and a closed position, characterized in that, the said transmission system being constituted by a closed-loop cable (1) driven by the said motion generator and passing round pulleys (5) secured to the other side of the movable panel (6), each reaction member (3, 10) is fixed to a side (1a) of this cable arranged in parallel relationship to a guiding rail (9) of the said reaction member on the movable panel, whereas the said frame structure is provided with means for holding the said reaction members (3, 10) against movements directed in the direction of displacement of the movable panel (6).

2. A device according to claim 1, characterized in that the aforesaid reaction members are each provided with a finger (10) or the like, and the aforesaid means for holding these members are constituted by a recess (11) provided in the frame structure (8) and in which the said finger is freely inserted.

3. A device according to claim 2, characterized in that the aforesaid recess (11) has two faces in transverse relationship to the aforesaid frame structure, i.e. a first face fulfilling the function of an abutment for the finger (10), and a second face which forms not only an abutment but also an inclined surface (15) for the said finger so as to allow the movable panel to be lifted at the end of the closing and to be lowered at the beginning of the opening.

4. A device according to claim 3, characterized in that the aforesaid first face is constituted by the end (12b, 13b) of a rail (12, 13) or of a slide (18) allowing the rolling or the sliding of the movable panel (6), whereas the aforesaid second face with the inclined surface (15) is constituted by a cam (16) secured on the frame structure (8) between the said end of the rail or of the slide and the end (12c, 13c) of another rail aligned with the latter.

5. A device according to claim 4, characterized in that the aforesaid movable panel is provided with rollers (14) or with guiding runners (19) co-operating with the aforesaid rails or slides (12, 13, 18), the said slides (19) being so shaped as to prevent any lifting of the movable panel (6) except in the position in which the said panel is lifted or lowered by the aforesaid cam (16).

6. A device according to claim 1, characterized in that the closed-loop cable (1) passes round four pulleys (5) arranged at the four corners of the movable panel (6) in such a manner that the reaction member (3, 10) fixed to the lateral sides (1a) of the cable (1) is guided in the rail (9) arranged in parallel relationship to the said sides between the latter and the edge of the movable panel (6).

0 034 965

Fig. 1

Fig. 2

Fig. 3

Fig. 4

Fig. 5